# EUROPÄISCHE PATENTSCHRIFT

(11) **EP 2 337 124 B1**
(45) Veröffentlichungstag und Bekanntmachung des Hinweises auf die Patenterteilung: **07.05.2014**
(21) Anmeldenummer: 09179207.7
(22) Anmeldetag: 15.12.2009
(51) Int. Cl.: H01M 4/42, H01M 4/62, H01M 6/06, H01M 12/06, H01M 2/04

(54) **Elektrochemische Gasentwicklungszelle, insbesondere quecksilberfreie Wasserstoffentwicklungszelle**
Electrochemical gas development cell, in particular mercury-free hydrogen development cell
Cellule électrochimique de production de gaz, notamment cellule de production d'hydrogène sans mercure

(43) Veröffentlichungstag der Anmeldung: 22.06.2011
(73) Patentinhaber: simatec ag, 3380 Wangen an der Aare (CH)
(72) Erfinder: Gfeller, Hans, 4912 Aarwangen (CH); Häring, Pascal, 4147 Aesch (CH)
(74) Vertreter: Fischer, Michael

(56) Entgegenhaltungen:
- US-A1- 2004 229 090
- US-A1- 2005 106 461
- US-A1- 2008 226 976
- US-B1- 6 461 761

## Beschreibung

Die vorliegende Erfindung bezieht sich auf eine elektrochemische Gasentwicklungszelle, insbesondere auf eine quecksilberfreie Wasserstoffentwicklungszelle.

Gasentwicklungszellen werden in der Regel dazu eingesetzt, mittels der Gasentwicklung einen Druck aufzubauen und auf diese Weise fluide Medien selbsttätig zu bewegen/fördern. Beispielhaft für die fluiden Medien können Schmierstoffe, Duftstoffe und Arzneimittel genannt werden. Gattungsgemässe Gasentwicklungszellen sind beispielsweise aus der deutschen Offenlegungsschrift 35 32 335 und der europäischen Patentanmeldung EP 1 396 899 A2 bekannt.

Moderne Gasentwicklungszellen arbeiten in der Regel als Wasserstoffentwicklungszellen. Dabei wird in einer elektrochemischen Reaktion an der Anode metallisches Zink in einem alkalischen Elektrolyten zum zweifach positiv geladenen Zinkion (Zn++) oxidiert und an der Kathode das gewünschte Wasserstoffgas durch eine Reduktionsreaktion aus Protonen enthaltenden Kationen Wasserstoff erzeugt wird. Diese elektrochemischen Gasentwicklungszellen werden heute mit quecksilberhaltigem Zinkpulver aufgebaut. Das Quecksilber dient dabei als Korrosionsschutz für einen Stromsammler auf der negativen metallisches Zink anbietenden Batterieseite (Anodenseite bei Entladung) und trägt ebenfalls zur Verringerung der ungewollten Wasserstoffentwicklung durch Selbstkorrosion des Zinks bei, bei der sich ansonsten eine ungewollte spontane Wasserstoffentwicklung auf der zinkhaltigen Anode durch eine alkalische Zinkkorrosion oder durch eine Ausbildung eines elektrochemischen Lokalelements mit der Oberfläche des Stromsammlers einstellen würde. Der Gehalt an Quecksilber beträgt in existierenden Gaszellen vom Typ Zn/Alkalielektrolyt/Kohle-Nickel bezogen auf den Gesamtmetallgehalt im Zinkpulver etwa 1 bis 8%. Neben diesem Gehalt an Quecksilber können derartige Gasentwicklungszellen auch kleinere Bestandteile von Blei und Cadmium enthalten. Diese Beimengungen liegen typischer Weise ebenfalls im Bereich von 0,5 bis 6%.

Aufgrund der Toxizität der Metalle Quecksilber, Blei und Cadmium wird im Zuge strenger gesetzlicher Auflagen an einem Ersatz dieser Stoffe durch weniger toxische Metalle bzw. nichtmetallische Additive gearbeitet bzw. der Einsatz weniger toxischer Metalle bei gleichzeitigem Verbot von Quecksilber, Blei und Cadmium verbindlich vorgeschrieben. Spuren von Hg, Cd, und Pb können jedoch noch vorkommen An dieser Stelle sei daher bei dem Verzicht auf Hg, Cd, Pb-Zusätze bzw. auf die Nicht-Notwendigkeit der Deklaration von diesen Metallen im Sinne der EU-Batteriedirektive hinzuweisen. Der Artikel 21(3) der EU-Batteriedirektive 2006/66/EC sagt, dass im Sinne dieser Direktive von einer Quecksilber-, Cadmium- und Bleifreiheit gesprochen werden kann, wenn die entsprechenden Gehalt für Hg weniger als 5 ppm Hg, für Cd weniger als 20 ppm und für Pb weniger als 40 ppm, bezogen auf das Gesamtgewicht des Produkts, betragen.

Hierzu sind aus den US-Patentanmeldungen 2008/226976 und 2004/229090 diesbezügliche quecksilberfreie elektrochemische Gasentwicklungszellen bekannt. Die erstgenannten Schrift offenbart für die Metallanode eine Legierung aus Zink, Indium und Bismut, wobei vorzugsweise 100 ± 25 ppm Bismut und 200 ± 30 ppm Indium umfasst sind.

Die zweitgenannte Schrift offenbart eine elektrische Zn/Luft-Batterie. Die hier für die Zn/Luft-Batterie offenbarte Legierung kann bis zu 500 ppm Bismut und Indium enthalten. Weiter offenbart das US-Patent 6 461 761 in einer Ausführungsform auch Legierungen mit bis zu 500 ppm Blei zusätzlich zu der Legierung aus Zink, Indium (300 ppm), Bismuth (300 ppm) und Calcium (300 ppm). Weiter enthält die hier offenbarte Zn/Luft-Batterie das Indium in Form von Indiumhydroxid. Weiter wird dieses Indiumhydroxid als Korrosionshemmer in Elektrolyten eingesetzt und Surflon® S-161 ist als oberflächenaktiven Stoff und Carbopol®940 ist als Viskositätsbildner umfasst.

Aus der US 4,948,684 ist eine wiederaufladbare Zn-Batterie offenbart. Das hier eingesetzte Benzotriazol dient zu Verhinderung der Kupferkorrosion am Ende des Endladevorganges, damit die Zn-Batterie wiederholt aufgeladen werden kann, d.h. überhaupt aufladbar bleibt (vgl. US 4,948,684, claim 1 in Spalte 4).

Der vorliegenden Erfindung liegt daher die Aufgabe zugrunde, eine Gasentwicklungszelle anzugeben, die frei von Quecksilber, Blei und Cadmium ist und dennoch über die gewünschten Eigenschaften, insbesondere bezüglich der Gasförderrate, bisher bekannter Gasentwicklungszellen verfügt.

Diese Aufgabe wird erfindungsgemäss durch eine elektrochemische Gasentwicklungszelle, insbesondere durch eine quecksilberfreie Wasserstoffentwicklungszelle, gelöst, die eine Metallanode, einen Elektrolyten und eine Gasdiffusionselektrode aufweist, wobei die Metallanode als Hauptbestandteil Zink mit Additiven von Indium und Bismut umfasst und wobei die elektrochemische Gasentwicklungszelle, berechnet auf ihr Gesamtgewicht, für Quecksilber weniger als 5 ppm, für Cadmium weniger als 20 ppm und für Blei weniger als 40 ppm enthält, wobei der Elektrolyt über Zusätze aus jeder der nachfolgend genannten Stoffgruppen verfügt:
a) Korrosionshemmer,
b) oberflächenaktive Stoffe (Netzmittel), und
c) Viskositätsbildner,
   und wobei
   iii) als Korrosionshemmer einer oder mehrere der nachfolgenden Verbindungen eingesetzt werden: Benzotriazol, Tolyltriazol, Tolyltriazol-Lösung und Benzimidazol;
   ii) als oberflächenaktive Stoffe, die auf der Oberfläche des Zinks zu einer Begrenzung der Reaktionskeime genutzt werden, sind eine oder mehrere der nachfolgend genannten Verbindungen umfasst: Sulfonsalze, Polyethylen-Glykole (PEGs), PEG Diacid, Poly-Fluor-Alkohol-Ethoxylat, Akyl-Polyethylen-Oxid, Polyethylen-Ether, Diaminpyridin, Phenyldiamin, Aminophenol-Sulfonsäure, 2,4-Di-Nitrophenole, Benzidin, Fluortenside, Hydroxyethyl-chinolin und quarternäre Ammoniumphenolate; und
   iii) als Viskositätsbildner sind einer oder mehrere der nachfolgenden Stoffe umfasst: natürliche Stoffe, wie Polyalkohol, Zellulose oder Zellulose-Derivate, wie z.B. Carboxymethyl-Zellulose (CMC) und Agar, und als Polymere Polyvinylalkohol, Teflon (PTFE) und Polyacryl-Säuren.

Diese Stoffe tragen zu einer weiteren Verminderung der Zinkselbstentladung und einer spontanen und unkontrollierten Wasserstoffentwicklung bei. Weiter können die Potentialdifferenz von Lokalelementen verringert und die Fliesseigenschaften des Elektrolyten günstig beeinflusst werden. Beispielhaft kann die Addition von inorganischen und organischen Säuren, wie Phosphorsäure, Weinsäure, Bernsteinsäure und Zitronensäure, zu dem Elektrolyten genannt werden, wodurch die Wasserstoffüberspannung verbessert und die Bildung von Dendriten verringert werden kann. Diese Additive werden typischer einem NaOH/KOH-Elektrolyten beigefügt, der etwa 0.3 bis 0.6 mol ZnO enthält.

Die Kathode besteht hauptsächlich aus Zn und ZnO, wobei eingewebte Zellulosefasern als interne Feuchteleiter dienen können. Diese Fasern bilden dabei interne Elektrolyt-Kanäle, welche die Elektrode über einen langen Betriebszeitraum nass und porös halten.

Überall dort, wo elektrisch isolierende und/oder materialtrennende Materialien gefordert sind, können Poly-Vinylalkohol(PVA), Poly-Acrylsäure (PAA), Polyethylen (PE) und Polypropylen (PP) eingesetzt werden.

Der Stromsammler auf der Kathodenseite hat oft eine dreimetallische Natur von Ni/SS304/CU-Band, wobei Kupfer innenliegend im Deckel angeordnet ist. Dieses Band kann auf der Kupferseite eine zusätzliche Metallbeschichtung aufweisen, welche aus Zinn besteht. Die Schichtdicke dieser Zinnschicht kann 0.2 bis 10 µm betragen und kann durch unterschiedliche Techniken aufgebracht werden, wie zum Beispiel durch stromlose Beschichtung, elektrochemisch oder bedampft aufgetragen). Diese zusätzliche Zinnschicht kann kleinere Defekte haben, wie z.B. kleine Poren oder Risse, was dazu führen kann, dass die Kupferschicht des Stromsammlers dem aggressiven alkalischen Elektrolyten ausgesetzt ist. Deshalb ist das Hinzufügen von Additiven erforderlich um die Nebenreaktionen aufgrund der elektrischen Eigenschaften des Kupfer/Elektrolyt/Zink-Systems zu reduzieren. Um die Ebenmässigkeit der Zinnbeschichtung zu verbessern, kann der beschichtete Film auf eine Temperatur nahe des Schmelzpunkts für Zinn aufgeheizt werden, wodurch mögliche Defekte repariert werden können. Dies führt zu einem Verschwinden der kleinen Poren und zu einer schnelleren spontanen Legieren der Zinnschicht mit den Kupferatomen. Diese Temperaturbehandlung kann auch in Kombination mit einer mechanischen Behandlung einhergehen.

Für die positive Elektrode kann rostfreier Stahl oder ein anderer tiefziehfähiger Stahl verwendet werden, welcher ev. anschliessend and den Umformungsprozess zusätzlich durch eine Nickelbeschichtung veredelt wird.

Eine weitere vorteilhafte Weiterbildung der vorliegenden Erfindung ergibt sich, wenn eine zu der Metallanode gerichtete Innenfläche eines Stromableiters mit einer Cu/Zn- und/oder einer Cu/Sn- und/oder einer Cu/Zn/Sn-Legierung zumindest teilweise beschichtet ist. Diese Metallschicht kann auch zusätzlich Indium enthalten. Durch die zumindest teilweise Beschichtung gelingt es die Wasserstoffüberspannung der Oberfläche zu erhöhen, die Korrosionseigenschaften des Stromsammlers zu verbessern und den Übergangswiderstand zwischen der elektroaktiven Metallanode und dem Stromsammler zu stabilisieren.

Eine besonders sichere und gleichmässige Funktion der elektrochemischen Gasentwicklungszelle ergibt sich, wenn die Konzentration von Indium und Bismut im Bereich von 50 bis 2000 ppm, vorzugsweise im Bereich von 100 bis 1000 ppm, liegt. Eine derartige Konzentration hat sich als ausreichend erwiesen, um die durch das Fehlen der toxischen Metalle Quecksilber, Blei und Cadmium entfallenden Wirkungen wiederherstellen zu können.

Zur Erzielung dieser gewünschten Wirkungen ist es besonders zweckmässig, wenn die Korngrössen von Indium und Bismut im Bereich von 0,5 bis 1000 µm, vorzugsweise von 1 bis 500 µm, liegen.

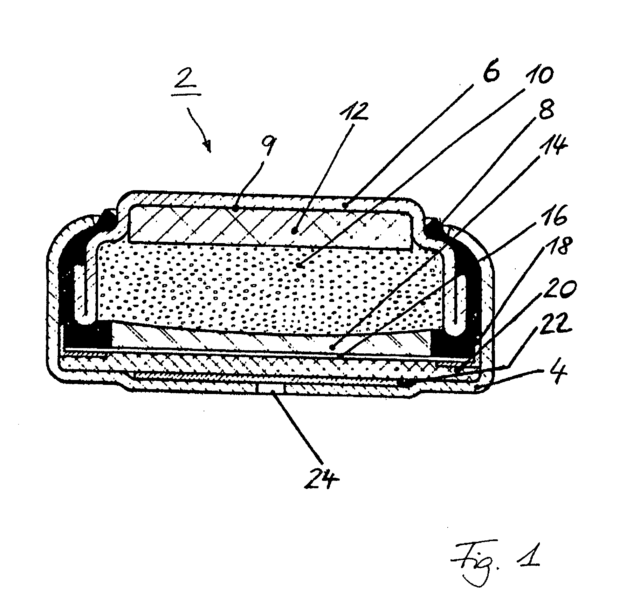

Bevorzugte Ausführungsbeispiele der vorliegenden Erfindung werden nachfolgend anhand einer Zeichnung näher erläutert. Dabei zeigt die Abbildung in schematischer Ansicht den Aufbau einer erfindungsgemässen Gasentwicklungszelle 2. Die Gasentwicklungszelle 2 umfasst einen Becher 4 und einen Deckel 6, die zusammen mit einer Dichtung 8 das Gehäuse der Gasentwicklungszelle 2 bilden. Der Boden des Deckels 6 trägt zusätzlich auf seiner Innenseite eine Beschichtung 9 aus einer Cu/Zn-Legierung, mit der die Wasserstoffüberspannung der Oberfläche des elektroaktiven Materials erhöht, die Korrosionseigenschaften einer Zinkanode 10 verbessert und der Übergangswiderstand zwischen der Zinkanode 10 und dem Deckelboden, der als Stromsammler dient, stabilisiert werden kann. Diese Beschichtung 9 kann auch aus einer Cu/Sn- oder einer Cu/Zn/Sn-Legierung oder auch aus beliebigen Kombination der vorstehenden Legierungen bestehen.

Die Zink-Anode 10 ist in den Deckel 6 eingelegt. Sie besteht vorliegend aus Zink-Pulver mit Additiven von Indium und Bismut. Die Konzentration von Indium und Bismut beträgt jeweils etwa 300 ppm. Diese Konzentration kann aber insgesamt mit vom Bereich von etwa 50 bis 2000 ppm liegen. Die Korngrössen der Indium und Bismut-Beimengungen korrespondieren zu den Korngrössen des Zinkpulvers, die im Bereich von 1 bis 500 µm liegen. Diese Korngrössen können aber auch im Bereich von 0,5 bis 1000 µm liegen. Die auf diese Weise gebildete Zink-Anode 10 ist frei von Zusätzen welche Quecksilber, Blei oder Cadmium enthalten. Als Spurenverunreinigung können diese Elemente jedoch noch vorkommen, übersteigen jedoch die Werte von 0.0005% Hg, 0.002% Cd und 0.004% Pb, berechnet auf das Gesamtgewicht der elektrochemischen Zelle nicht. Die Zelle ist deshalb gemäss der europäischen Batteriedirektive 2006/66/EC für diese Elemente nicht deklarationspflichtig. Werden diese Verunreinigungskonzentrationen nicht übertroffen, wird dies allgemein als quecksilberfrei, bleifrei und cadmiumfrei interpretiert. Am Boden des Deckels 6 kann ein poröser kompressionsfähiger Körper 12 angeordnet sein, der zusätzliche Elektrolyt-Lösung bereitstellen kann. Auf der vom Boden des Deckels 6 abgewandten Seite der Zink-Anode 10 ist ein Elektrolyt-getränktes Vlies 14 angeordnet. Der Elektrolyt selbst umfasst eine etwa 20 bis 40%igen Kalilauge. Zudem enthält der Elektrolyt Korrosionshemmer und Viskositätsbildnersowie optional oberflächenaktive Stoffe, die insgesamt helfen, das System weiter zu verbessern. Die Wahl dieses Elektrolyten mit seinen vorstehend genannten Zusätzen unterstützt die Verringerung der Zinkselbstentladung, der spontanen und unkontrollierten Wasserstoffentwicklung und der Potentialdifferenz von Lokalementen.

Das Elektrolyt-Flies wird kathodenseitig von einer Separatorfolie 16 abgedeckt. Die Separatorfolie 16 ist eine typische poröse Polymer-Membran, wie sie beispielsweise auch in Batterien mit alkalischem Elektrolyt eingesetzt wird. Die Separatorfolie 16 wird durch einen Stützring 18 in Position gehalten. An die Separatorfolie 16 schliesst sich eine Gasdiffusions-Elektrode 20 an, die aus einer PTFE-gebundenen nickelhaltigen Pulverschicht besteht, die in ein Nickelnetz eingewalzt wurde und zur Becherbodenseite hin eine poröse PTFE-Folie besitzt. Diese Folie ist für die Funktion nicht notwendig, aber sie dient jedoch der besseren Dichtigkeit bzgl. eines Elektrolyten-Ausfliessens in das offene System auf der Gasdiffusionsseite. Der metallische Stützring 18 kontaktiert die Gasdiffusions-Elektrode 20 und verbindet sie elektrisch mit dem Becher 4. Zwischen der Gasdiffusions-Elektrode 20 und dem Boden des Bechers 4 ist noch eine grobporige Vliesschicht 22 eingelegt, die dazu dient, das aus der Gasdiffusions-Elektrode 20 im Betrieb flächig austretende Wasserstoffgas zu einem Loch 24 im Becherboden zu führen und dort austreten zu lassen.

## Patentansprüche

1. Elektrochemische Gasentwicklungszelle (2), insbesondere quecksilberfreie Wasserstoffentwicklungszelle, mit einer Metallanode (10), einem Elektrolyten (14) und einer Gasdiffusionselektrode (20), wobei die Metallanode (10) als Hauptbestandteil Zink mit Additiven von Indium und Bismut umfasst und wobei die elektrochemische Gasentwicklungszelle, berechnet auf ihr Gesamtgewicht, für Quecksilber weniger als 5 ppm, für Cadmium weniger als 20 ppm und für Blei weniger als 40 ppm enthält, wobei der Elektrolyt (14) über Zusätze aus jeder der nachfolgend genannten Stoffgruppen verfügt:
a) Korrosionshemmer;
b) oberflächeaktive Stoffe; und
c) viskositätbildner,
und wobei
i) als Korrosionshemmer einer oder mehrere der nachfolgenden Verbindungen eingesetzt werden: Benzotriazol, Tolyltriazol, Tolyltriazol-Lösung und Benzimidazol;
ii) als oberflächenaktive Stoffe, die auf der Oberfläche des Zinks zu einer Begrenzung der Reaktionskeime genutzt werden, sind eine oder mehrere der nachfolgend genannten Verbindungen umfasst: Sulfonsalze, Polyethylen-Glykole (PEGs), PEG Diacid, Poly-Fluor-Alkohol-Ethoxylat, Alkyl-Polyethylen-Oxid, Polyethylen-Ether, Diaminpyridin, Phenyldiamin, Aminophenol-Sulfonsäure, 2,4-Di-Nitrophenole, Benzidin, Fluortenside, Hydroxyethyl-chinolin und quarternäre Ammoniumphenolate; und
iii) als Viskositätsbildner sind einer oder mehrere der nachfolgenden Stoffe umfasst: natürliche Stoffe, wie Polyalkohol, Zellulose oder Zellulose-Derivate, wie z.B. Carboxymethyl-Zellulose (CMC) und Agar, und als Polymere Polyvinylalkohol, Teflon (PTFE) und Polyacryl-Säuren.

2. Elektrochemische Gasentwicklungszelle (2), insbesondere quecksilberfreie Wasserstoffentwicklungszelle, nach Anspruch 1, **dadurch gekennzeichnet, dass**
eine zu der Metallanode (10) gerichtete Innenfläche eines Stromableiters (6) eine zumindest teilweise Beschichtung (9) mit Cu/Zn- und/oder einer Cu/Sn- und/oder einer Cu/Zn/Sn-Legierung aufweist.

3. Elektrochemische Gasentwicklungszelle (2), insbesondere quecksilberfreie Wasserstoffentwicklungszelle, nach Anspruch 1 oder 2, **dadurch gekennzeichnet, dass** die Konzentration von Indium und Bismut im Bereich von 50 bis 2000 ppm, vorzugsweise von 100 bis 1000 ppm, liegt.

4. Elektrochemische Gasentwicklungszelle (2), insbesondere quecksilberfreie Wasserstoffentwicklungszelle, nach einem der Ansprüche 1 bis 3, **dadurch gekennzeichnet, dass** die Korngrössen von Indium und Bismut im Bereich von 0,5 bis 1000 µm, vorzugsweise von 1 bis 500 µm, liegen.

## Claims

1. Electrochemical gas development cell (2), in particular mercury-free hydrogen development cell with a metal anode (10) an electrolyte (14) and a gas diffusion electrode (20), wherein the metal anode (10) comprises zinc as its major constituent with additives of indium and bismuth and wherein the electrochemical gas development cell comprises for mercury less than 5ppm, for cadmium less than 20ppm and for lead less than 40 ppm calculated on its total weight, wherein the electrolyte (14) possesses additions of each of the following element groups:
a) corrosion inhibitor;
b) surface-active substances; and
c) viscosity former,
and wherein
i) as a corrosion inhibitor one or several of the following compounds can be appointed: benzotriazole, tolyltriazole, tolyltriazole solution and benzimidazole;
ii) as surface-active substances that are used for the limitation of reaction seed crystals on the surface of the zinc one or several of the following compounds are included: sulfon salt, polyethylene-glycole (PEGs), PEG diacide, poly-fluor-alcohol-ethoxyclate, alkyl-polyethylene-oxide, polyethylene-ether, diaminpyridine, phenyldiamine, aminophenol-sulfoneacid, 2,4-di-nitrophenole, benzidine, fluortensides, hydroxyethyl-chinoline and quaternary ammoniumphenolate; and
iii) as a viscosity former one or several of the following substances are included: natural substances like polyalcohol, cellulose or cellulose derivates, for instance carboxymethyle-cellulose, Teflon (PTFE) and polyacryle-acids.

2. Electrochemical gas development cell (2), in particular mercury-free hydrogen development cell according to claim 1, **characterized in that** an inside area of a current collector (6) that points towards the metal anode (10) features one at least partial covering (9) with Cu/Zn- and/or a Cu/Sn- and/or a Cu/Zn/Sn- alloy.

3. Electrochemical gas development cell (2), in particular mercury-free hydrogen development cell according to one of the claims 1 or 2, **characterized in that** the concentration of indium and bismuth lies in the range from 50 to 2000 µm, preferably from 100 to 10000 µm.

4. Electrochemical gas development cell (2), in particular mercury-free hydrogen development cell according to one of the claims 1 to 3, **characterized in that** the particle size of indium and bismuth lies in the range from 0,5 to 1000 µm, preferably from 1 to 500 µm.

## Revendications

1. Cellule ( 2 ) électrochimique de production de gaz, notamment cellule de production d'hydrogène sans mercure, comprenant une anode ( 10 ) métallique, un électrolyte ( 14 ) et une électrode ( 20 ) à diffusion de gaz, l'anode ( 10 ) métallique comprenant, comme constituant principal, du zinc avec des additions d'indium et de bismuth et la cellule électrochimique de production de gaz contenant, calculée sur son poids total, pour le mercure, moins de 5 ppm, pour le cadmium, moins de 20 ppm, et pour le plomb, moins de 40 ppm, l'électrolyte ( 14 ) disposant d'additifs choisis dans chacun des groupes de substances mentionnés ci-après :
a) les inhibiteurs de corrosion ;
b) les substances tensioactives et
c) des agents donnant de la viscosité,
et dans laquelle
i) on utilise comme inhibiteurs de corrosion un ou plusieurs des composés suivants : le benzotriazole, le tolyltriazole, une solution de tolyltriazole et le benzimidazole ;
ii) comme substances tensioactives, qui sont utilisées à la surface du zinc pour limiter les germes de réaction, sont englobés un ou plusieurs des composés mentionnés ci-après : les sulfosels, les polyéthylène-glycols ( PEGs ), un diacide de PEG, un éthoxylate d'alcool poly fluoré, un oxyde polyéthyléné d'alcoyle, l'oxyde de polyéthylène, la diaminpyridine, la phényldiamine, l'acide sulfonique d'amino phénol, les 2,4 dinitrophénol, la benzidine, un agent tensioactif fluoré, l'hydroxyéthylquinoléine et des phénolates d'ammonium quaternaire et
iii) comme agents donnant de la viscosité, sont englobées une ou plusieurs des substances suivantes : des substances naturelles, comme un polyol, la cellulose ou des dérivés de cellulose, comme par exemple la carboxyméthylcellulose ( CMC ) et l'agar, et comme polymères, de l'alcool polyvinylique, du téflon ( PTFE ) et des acides polyacryliques.

2. Cellule ( 2 ) électrochimique de production de gaz, notamment cellule de production d'hydrogène sans mercure, suivant la revendication 1, **caractérisée en ce qu'**une surface intérieure d'un dérivateur ( 6 ) de courant, tournée vers l'anode ( 10 ) métallique, a au moins en partie un revêtement ( 9 ), en un alliage de Cu/Zn et/ou en un alliage de Cu/Sn et/ou en un alliage de Cu/Zn/Sn.

3. Cellule ( 2 ) électrochimique de production de gaz, notamment cellule de production d'hydrogène sans mercure, suivant la revendication 1 ou 2, **caractérisée en ce que** la concentration d'indium et de bismuth va de 50 à 2000 ppm, en allant de préférence de 100 à 1000 ppm.

4. Cellule ( 2 ) électrochimique de production de gaz, notamment cellule de production d'hydrogène sans mercure, suivant l'une des revendications 1 à 3, **caractérisée en ce que** les granulométries de l'indium et du bismuth vont de 0,5 à 1000 µm, en allant de préférence de 1 à 500 µm.
